# EUROPEAN PATENT SPECIFICATION

(11) **EP 3 749 273 B1**
(45) Date of publication and mention of the grant of the patent: **04.09.2024**
(21) Application number: 19704429.0
(22) Date of filing: 04.02.2019
(51) Int. Cl.: A61G 1/06, A61G 3/00, A61G 3/08, B60N 2/06, B60N 2/07

(54) **IMPROVEMENTS IN OR RELATING TO FLOOR FIXINGS IN VEHICLES**
VERBESSERUNGEN AN ODER IM ZUSAMMENHANG MIT BODENBEFESTIGUNGEN IN FAHRZEUGEN
AMÉLIORATIONS APPORTÉES OU SE RAPPORTANT À DES FIXATIONS DE PLANCHER DANS DES VÉHICULES

(30) Priority: 05.02.2018 GB 201801841
(43) Date of publication of application: 16.12.2020
(73) Proprietor: NMI Safety Systems Ltd, Stevenage, Hertfordshire SG1 2BD (GB); BLUE LIGHT SERVICES SV LIMITED, London, Greater London NW10 7XH (GB)
(72) Inventor: CHARALAMPIDIS, Rovertos, London, Greater London NW10 7XH (GB)
(74) Representative: Forresters IP LLP
(86) International application number: PCT/GB2019/050290
(87) International publication number: WO 2019/150131

(56) References cited:
- EP-A2- 1 995 110
- GB-A- 2 467 524
- JP-A- 2009 292 403
- US-A- 4 341 415
- US-A1- 2002 047 287

## Description

This application relates to floor fixings in vehicles, and particularly concerns floor fixings in vehicles such as ambulances. A vehicle comprising such an arrangement is disclosed in the US4341415.

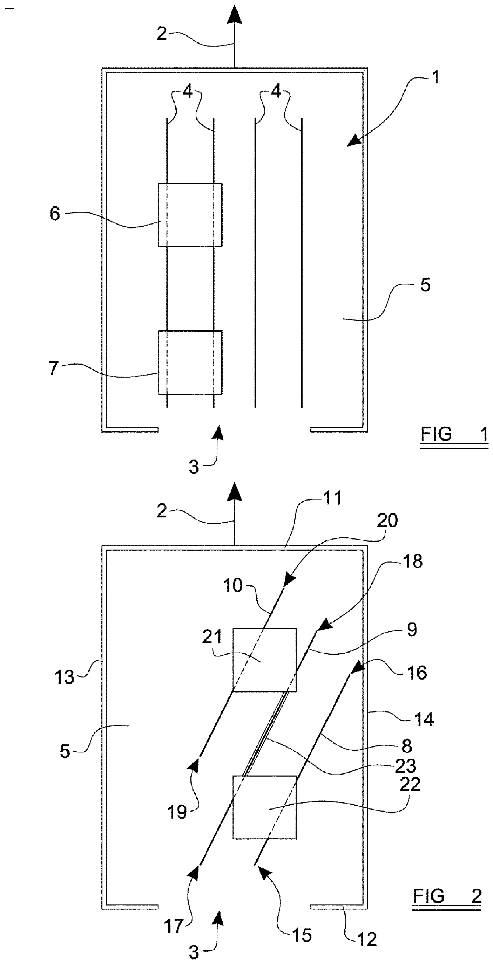

Many ambulances (and other similar vehicles) have fixings which are installed in the vehicle floor to allow a patient on a stretcher to be accommodated in a convenient way within the ambulance. Figure 1 shows a schematic view of the main internal space 1 of an ambulance, as viewed from directly above. An arrow (indicated by reference numeral 2) designates the normal forward direction of travel of the ambulance, and an entryway 3, which may be accessed through the rear doors (not shown), is also shown.

Four parallel tracks 4 are installed in the floor 5 of the ambulance. Each track 4 generally comprises a groove having a scalloped edge. A known floor fitting may be placed into the groove and locked longitudinally in place at a desired position along each track 4. When a suitable fitting is locked in place on each track 4, the fitting may also not be lifted upwardly out of the track 4, as will be understood by the skilled reader.

Figure 1 schematically shows a standard front lock 6, and a standard rear lock 7, each of which are positioned on two adjacent tracks 4. Each lock 6, 7 has a pair of fittings, spaced apart by a known, standardised distance so that each lock 6, 7 may be attached to two parallel tracks 4, and locked in place with respect to the floor 5 of the ambulance. In the arrangement shown in figure 1, both the front lock 6 and the rear lock 7 are attached on the same pair of parallel tracks 4, and the front and rear locks 6, 7 are fixed in place at a known longitudinal distance apart.

The tracks 4 to which the locks 6, 7 are attached are not aligned with the entryway 3, and are located near one side wall, as is common practice.

In use, a stretcher, mounted on a standardised wheeled frame, is introduced into the ambulance through the entryway 3. The stretcher will generally be wheeled up a suitable ramp or may be lifted up on a motorised hoist or platform.

Once in the ambulance, the stretcher must be moved to one side, and the front and rear wheels of the stretcher's frame can be attached to the front and rear locks 6, 7 in a known manner. In general, the front and rear locks 6, 7 are configured so that the frame of the stretcher may simply be pushed into contact with the front and rear locks 6, 7, and the frame will automatically be fixed to the front and rear locks 6, 7. The frame may not then be removed from either the front or the rear lock 6, 7 without these locks being released, for instance by way of a foot pedal.

The stretcher, along with any patient resting thereon, is then locked in place with respect to the ambulance floor. There may be various seats and other equipment (not shown) arranged around the interior of the ambulance, which can then be used to help personnel to treat or otherwise assist the patient until the ambulance reaches its destination.

This known setup suffers from certain drawbacks. For instance, the front and rear locks 6, 7 must be placed on the tracks 4 at exactly the correct longitudinal distance apart, to interact correctly with the frame on which the stretcher is mounted. If the locks 6, 7 are spaced either too closely or too far apart from one another, the stretcher will not engage correctly with both of the locks 6, 7.

It is also relatively difficult to move the locks 6, 7 to a different position, either longitudinally along the same set of tracks 4, or laterally across the ambulance floor 5 onto a different pair of tracks 4. In general, the locks 6, 7 must be decoupled from the tracks 4, and lifted out of the tracks 4 to be placed in a new position. The locks 6, 7 are heavy components, and moving them to new positions can take a considerable length of time. It is certainly not practical to move the locks 6, 7 to a different position to accommodate a particular patient at short notice, or to move the patient to a different part of the ambulance floor 5 in a swift and reliable manner.

It is an object of the present intention to seek to address some or all of the above drawbacks.

Accordingly, one aspect of the invention provides a vehicle according to claim 1.

Preferred features of the invention are set out in the dependent claims.

In order that the invention may be more readily understood, embodiments thereof will now be described, by way of example, with reference to the accompanying figures, in which:
Figure 1 is a schematic view of a known arrangement for an ambulance floor;
Figure 2 is a schematic view of an arrangement embodying the present invention for an ambulance floor;
Figures 3 and 4 show a stretcher in a first position, in accordance with the arrangement shown in figure 2;
Figures 5 and 6 show a stretcher in a second position, in accordance with the arrangement shown in figure 2;
Figures 7 and 8 show a stretcher in a third position, in accordance with the arrangement shown in figure 2; and
Figure 9 shows front and rear locks suitable for use with the present invention.

Figure 2 shows a schematic view of the floor 5 of an ambulance, according to the present invention. As before, the ambulance has a normal forward direction of travel indicated by reference numeral 2, and has a rear entryway 3 which may be accessed through rear doors (not shown).

First, second, and third tracks 8, 9, 10 are provided on the floor 5 of the ambulance. These three tracks 8, 9 10 are parallel with each other. Importantly, the tracks 8, 9, 10 are inclined at an angle with respect to the normal forward direction of travel 2 of the ambulance. The angle between each track 8, 9, 10 and the normal forward direction of travel 2 is preferably between 6° and 30°, and is more preferably between 8° and 18°. The inventors have found that the most preferred angle is 14°, or around 14°.

The rear cabin of an ambulance will usually have a generally rectangular shape, having a front wall 11 and a parallel rear wall 12, and parallel left and right side walls 13, 14, which are set generally at right angles to the front and rear walls 11, 12. The tracks 8, 9, 10 are preferably set at an angle with respect to the side walls 13, 14.

A first track 8 is, in the configuration shown in figure 2, set closest to a right side wall 14, i.e. the wall which is on the right if the ambulance is viewed from the rear. The first track 8 has a rear end 15, which is near the entryway 3, and extends to a front end 16 which is close to the right side wall 14.

A second one 9 of the tracks is spaced apart from the first track 8, and is closer to the left side wall 13. The second track 9 extends from a rear end 17, which is again close to the entryway 3 and lies generally level with the rear end 15 of the first track 8, and extends to a front end 18 which is close to the right side wall 14, and also to the front wall 11.

Finally, the third track 10 is spaced apart from the second track 9 in a direction towards the left side wall 13. The third track 10 extends from a rear end 19, which is set further forward than the rear end 17 of the second track 9, and extends to a front end 20 which lies near to the front wall 11, generally level with the front end 18 of the second track 9.

The spacing between the first and second tracks 8,9 is preferably the same, or substantially the same, as the spacing between the second and third tracks 9,10.

A front lock 21 and a rear lock 22 are schematically shown in figure 2, arranged on the tracks 8, 9, 10.

The front lock 21 is fitted into the second and third tracks 9, 10, and may slide longitudinally along the length of these tracks 9, 10. The front lock 21 is, in the arrangement shown in figure 2, positioned relatively near to the front ends 18, 20 of the second and third tracks 9, 10.

The rear lock 22 is fitted into the first and second tracks 8, 9 and is positioned relatively near to the rear ends 15, 17 of these tracks 8, 9.

It will therefore be understood that both the front lock 21 and the rear lock 22 are fitted into the second track 9, which is the middle one of the three tracks 8, 9, 10.

It is preferred that, as shown in figure 2, the front and rear locks 21, 22 are arranged so that they face in the normal forward direction of travel 2 of the ambulance. In other words, if the support frame of a conventional stretcher is attached to the locks 21, 22, the stretcher will itself be oriented in a direction which is parallel or substantially parallel with the normal forward direction of travel 2 of the ambulance.

It will therefore be understood that the locks 21, 22 are mounted on the tracks 8, 9, 10 in such a way that the locks 21, 22 are not themselves parallel with the tracks 8, 9, 10.

The front and rear locks 21, 22, are set at an appropriate distance apart from one another so that the locks 21, 22 are directly or substantially aligned with one another in the normal forward direction of travel 2 of the ambulance.

A spacing arrangement 23 extends between the front and rear locks 21, 22, and is of a set length so that this desirable spacing between the front and rear locks 21, 22 is maintained.

In preferred embodiments of the invention, the spacing arrangement 23 passes along, or fits into, or is otherwise engaged with, the portion of the second track 9 that extends between the front and rear locks 21, 22. This means that the front and rear locks 21, 22 may slide as a unit along the tracks 8, 9, 10, and the spacing between the front and rear locks 21, 22 will be retained as this movement occurs.

Importantly, this spacing is such that, as the front and rear locks 21, 22 travel along the tracks 8, 9, 10, the front and rear locks 21, 22 remain aligned with one another, parallel, or substantially parallel, with the normal forward direction of travel 2 of the ambulance.

The spacing arrangement will be described in more detail below.

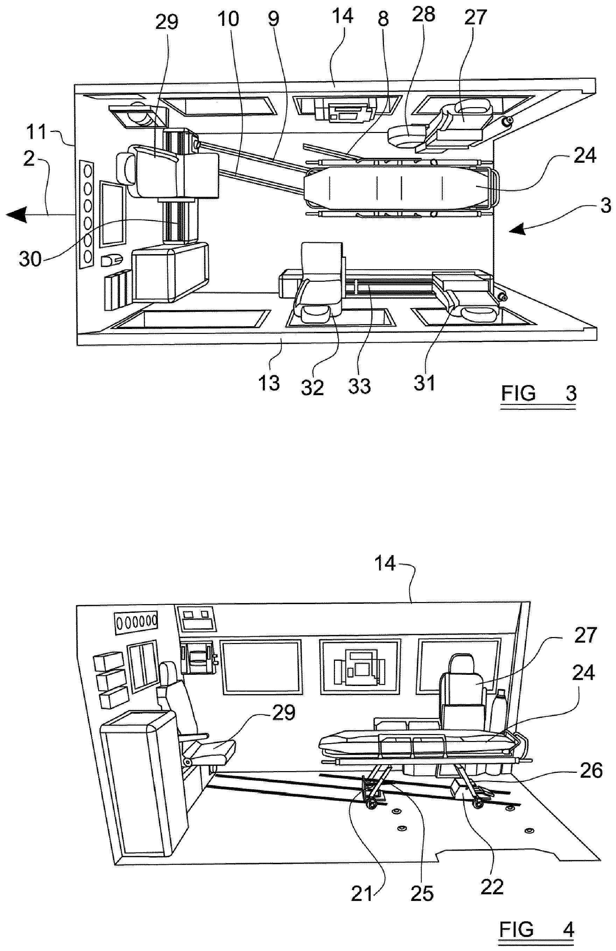

Figures 3 and 4 show the situation where a stretcher 24 mounted on a wheeled frame with front legs 25 and rear legs 26 is introduced into the rear of the ambulance through the entryway 3. As previously discussed, the stretcher 24 may be wheeled up a ramp to access the entryway 3.

The stretcher 24 enters the ambulance in a generally longitudinal direction, and its front and rear legs 25, 26 engage with, and lock with respect to, the front and rear locks 21, 22, which are shown in a first position. In this first position, the front and rear locks 21, 22 are positioned towards the rear of the ambulance floor, so the front lock 21 is positioned close to the rear end 19 of the third track 10, and the rear lock 22 is positioned close to the rear ends 16, 17 of the first and second tracks 8, 9.

As can be seen from figures 3 and 4, as the stretcher 24 is first introduced into the ambulance through the entryway 3, the front and rear locks 21, 22 are conveniently positioned to receive the front and rear legs 25, 26.

As discussed above, the front and rear locks 21, 22 are arranged such that each one is aligned with the normal forward direction of travel 2 of the ambulance, and the front and rear locks 21, 22 are also aligned with one another in a direction which is parallel with the forward direction of travel 2 of the ambulance. The stretcher 24 therefore locks in position towards the rear of the ambulance floor, in a way that is aligned with the ambulance.

In the arrangement shown, four seats are provided within the rear of the ambulance.

A first seat 27 is provided against the right side wall 14, towards the rear of the ambulance. In the example shown, the first seat 27 is positioned on the right rear wheel-arch 28, which protrudes into the cabin. The first seat 27 has a foldable squab, and may also rotate to point in a convenient direction. The first seat 27 is otherwise fixed in place, in this example.

A second seat 29 is positioned against the front wall 11, and is slideable laterally within the ambulance on a track 30, which is of known type. The second seat 29 may slide laterally and be fixed in place in a variety of positions along the front wall 11. The second seat 29 also has a foldable squab, and can again be rotated to face in any suitable direction.

Third and fourth seats 31, 32 are provided against the left side wall 13, and are slideable on a track 33, which extends along a part of this left side wall 13. The third and fourth seats 31, 32 each have foldable squabs, and may again rotate facing any suitable direction.

In the configuration shown in figures 3 and 4, the first seat 27 has its squab folded into a retracted position. This is, in the example shown, necessary for the stretcher 24 to be moved into the first position, as shown in figures 3 and 4.

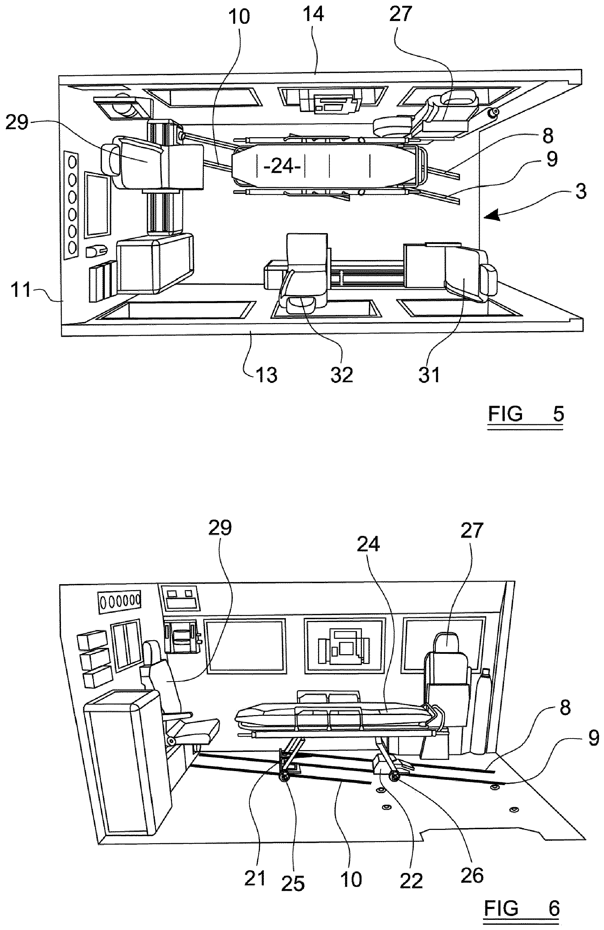

Once the stretcher 24 is in place, the front and rear locks 21, 22, along with the stretcher 24 itself, can be moved forwardly with respect to the ambulance, into a second position, which is shown in figures 5 and 6. In these figures, the front and rear locks 21, 22 have been moved forwardly along the tracks 8, 9, 10, into a position where the stretcher 24 is roughly central within the rear cabin of the ambulance, in the longitudinal direction thereof.

In this position, the first seat 27 still has its squab retracted. However, the second seat 29 has its squab folded down and faces rearwardly. It can be seen that, in this position, the second seat 29 is well placed for an operative to sit near the head of the patient, which will be at the forward end of the stretcher 24.

The fourth seat 32 also has its squab deployed in this position, and it can be seen that this seat 32 is well positioned for an operative to sit beside a patient who is on the stretcher 24.

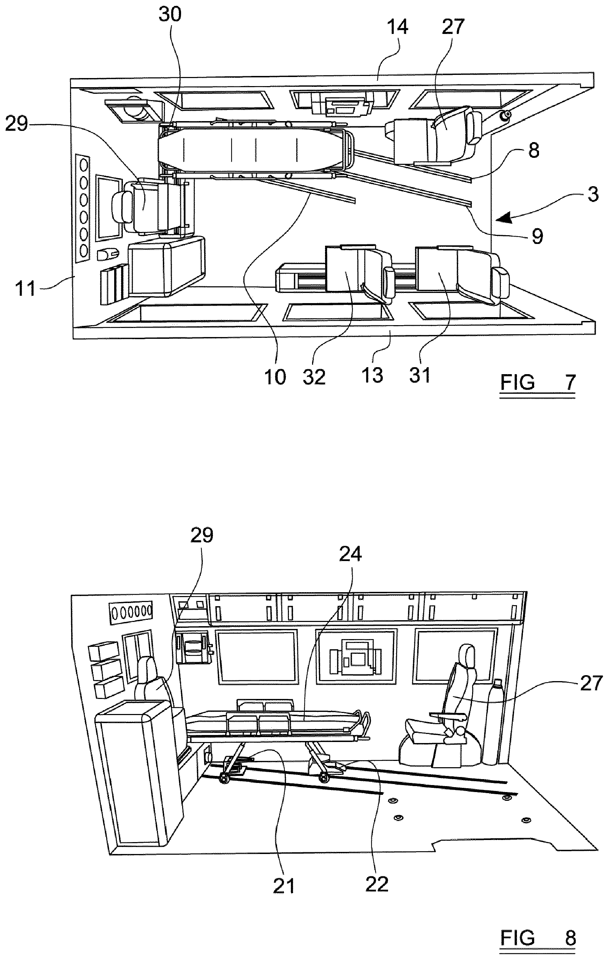

From this position, the stretcher 24 can be moved further forwardly into a third position, which is shown in figures 7 and 8. In this position, the front lock 21 is moved as far or nearly as far forward as it will go, i.e. to a position near the front ends 18, 20 of the second and third tracks 9, 10. The rear lock 22 lies near the front end 16 of the first track 8. The stretcher 24 is close to the front wall 11 of the ambulance, and also close to the right side wall 14 thereof.

In this position, the first, third and fourth seats 27, 31, 32 are all rotated so that they face forwardly, and the squabs thereof are deployed. These three seats may be used to accommodate ambulance crew when the ambulance is driving to its destination.

The second seat 29 is shown in figures 7, 8 with its squab retracted, but this seat 29 may also be occupied by a member of ambulance crew who can sit beside the head of the patient while the vehicle is in transit.

In the configuration shown in figures 7 and 8, the second seat 29 has been moved along the track 30 on which it is supported, away from the right side wall 14, to allow the stretcher 24 to move all the way to the front of the tracks 8, 9, 10.

In summary, in the first position, the stretcher 24 has just entered the ambulance, and is conveniently received by the front and rear locks 21, 22.

In the second position, the stretcher 24 is moved into a more central position within the ambulance, and this allows space for several members of the ambulance crew to attend to the patient in an effective manner, which makes good use of the space within the ambulance.

Finally, in the third position, the stretcher 24 is appropriately positioned for the ambulance to drive to its destination, while still allowing at least one operative to attend to the patient from a convenient position, near the patient's head.

It will also be noted that the arrangement of the tracks 8, 9, 10 in the floor of the ambulance allows the stretcher to move past the rear right wheel arch 28, into the third position, which is well-suited for the ambulance to be driven. In a conventional arrangement, such as shown in figure 1, this would be very difficult to achieve. Any track which is spaced far enough from the wall of the ambulance to avoid the wheel arch will only allow the stretcher to move to a forward position which is still spaced apart by a significant distance from the side wall.

As the skilled reader will understand, when the stretcher 24 is in the third position and is to be removed from the ambulance, the stretcher 24 is moved rearwardly, into the second position and then the first position, and the front and rear legs 25, 26 of the stretcher 24 can then be disengaged from the front and rear locks 21, 22 (as will be discussed in more detail below), and the stretcher 24 can be removed from the ambulance through the rear entryway 3. As discussed above, the stretcher 24 may be rolled down a suitable ramp, lowered down on a motorised hoist or platform, or removed in any other suitable way.

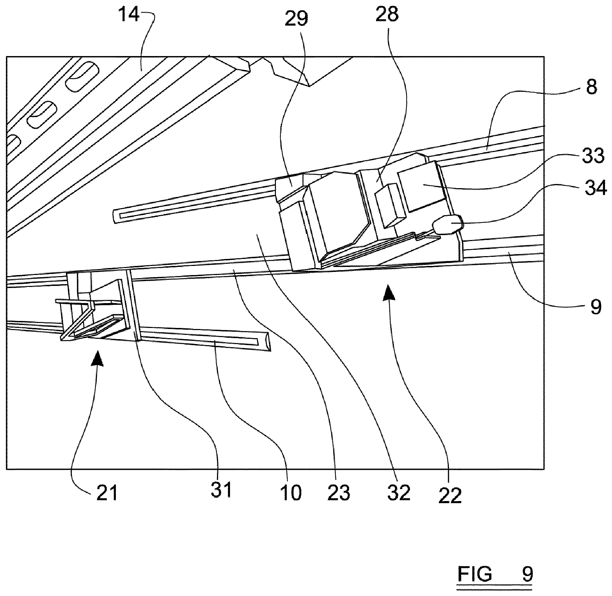

Figure 9 shows a view of front and rear locks 21, 22, suitable for use with the present invention, without a stretcher attached to them. The front and rear locks 21, 22 are shown mounted on tracks 8, 9, 10 on the floor of an ambulance, as discussed above.

As will be understood from the description above, it is preferred that the locks 21, 22 can slide along the length of the tracks 8, 9, 10. For this reason it is preferred that the tracks 8, 9, 10 each take the form of a straight groove, and are not scalloped or otherwise shaped in a way that would stop or hinder an object sliding along the groove.

In this example, the front and rear locks 21, 22 each include a known floor attachment. Considering the rear lock 22 in more detail, this includes a known floor attachment 35, for instance as supplied by Stryker^{®}. The standard floor attachment 35 is adapted to be attached to parallel tracks which are aligned with the forward direction of travel of an ambulance, (e.g. in the setup shown in figure 1).

The rear lock 22 further includes a support frame 36, which has fittings on its underside (not shown) which can fit into, slide along, and lock with respect to, the first and second tracks 8, 9.

The support frame 36 generally comprises a sheet of metal, such as steel, or any other suitable robust material. The support frame 36 has a suitable aperture formed therein to receive the standard floor attachment 35, and fix it robustly in place with respect to the support frame 36. The standard floor attachment 35 may be removably attached to the support frame 36, for instance through one or more bolts, rivets or pins, or may alternatively be more permanently attached to the support frame 36, for instance by welding.

On its underside the support frame 36 has an engagement arrangement (not shown) which is adapted to fit into, and slide along the first and second tracks 8, 9. For instance, the tracks 8, 9, 10 may each comprise a groove having a pair of inwardly-protruding lips at its entrance, and the engagement arrangement may comprise a pair of spaced-apart, downwardly protruding T-shaped bars, which fit into the grooves and are received under the inwardly protruding lips. The skilled reader will understand that these bars may therefore slide along the length of the tracks, encountering little resistance, but may not be lifted upwardly directly out of the tracks 8, 9, because the outwardly-protruding parts of the T-shape cannot move past the inwardly-protruding lips.

The invention is not limited to this, and any other suitable arrangement of track shape and engagement arrangement may be used.

When the known floor attachment 35 is attached to the support frame 36, the known floor attachment 35 is angled with respect to the parts of the support frame 36 that engage with the first and second tracks 8, 9, so that when the support frame 36 is attached to the first tracks 8, 9, the known floor attachment 35 is oriented in a direction which is generally parallel with the normal forward direction of travel of the ambulance.

Turning to the front lock 21, once again this lock 21 includes a known floor attachment 37, supported by a support frame 38, which may take a generally similar form to the support frame 36 of the rear lock 22. Once again, the support frame 38 has suitable fittings to be engaged with, travel along and be locked with respect to the second and third tracks 9, 10, and the known floor attachment 37 is angled as it is received in the support frame 38, so that it is generally aligned with the forward direction of travel of the ambulance.

While in this example the front and rear locks incorporate a known floor attachment, in other embodiments the front and rear locks may be entirely purpose-built, and include an engagement arrangement to cooperate with the track and a locking arrangement to engage and receive the appropriate legs of a stretcher.

A spacing arrangement 23 is provided between the front and rear locks 21, 22. In preferred embodiments, the spacing arrangement 23 extends between the respective support frames 36, 38.

In one embodiment, the spacing arrangement 23 comprises a rigid bar (not shown) formed from metal or another robust material, which is received in the groove of the second track 9. The bar is attached to the front and rear support frames 36, 38, so that the distance between these two support frames 36, 38 remains constant.

In the example shown, a cover 39, which may be formed from rubber or any other suitable material, covers the bar. This cover 39 helps to prevent dust and other substances from entering the groove of the second track 9 between the front and rear locks 21, 22.

The skilled reader will understand that, because of the spacing arrangement 23, the front and rear locks 21, 22 may slide along the tracks 8, 9, 10 as one unit, retaining the desired spacing to receive a standard stretcher frame, and also ensuring that the front and rear locks 21, 22 are correctly aligned with one another at all times.

In preferred embodiments of the invention, a locking transmission arrangement extends between the front and rear locks 21, 22. This may take the form, for example, of a Bowden cable, although any other suitable transmission arrangement may be used.

This may ensure that the front and rear locks, 21, 22 may be locked with respect to the ambulance floor by operating a single control, which can be positioned on only one of the locks 21, 22. In preferred embodiments, the locking controls are provided on the rear lock 22, as these are more likely to be readily accessible to an operator. In general, the stretcher 24 will be moved into the ambulance by an operator who pushes the stretcher from its rear side. The feet of the operator will therefore be in close proximity to the rear lock 22, and pedals can be provided on the rear lock 22 to allow the operator to lock and release the rear lock 22. Similarly, when the stretcher 24 is removed from the ambulance, it is likely to be by an operator who pulls the stretcher from its rear end. Once again, the feet of the operator will be in close proximity to the rear lock 22.

In one preferred embodiment, locking holes (not shown) are formed through the tracks 8, 9, 10, and also optionally into the ambulance floor, to allow the stretcher 24 to be locked at each of the three positions (i.e. the positions shown in figures 3 and 4, 5 and 6, and 7 and 8). In other embodiments, locking holes may be provided in more, fewer, or different locations, and the invention is not limited to this.

The front and rear support frames 36, 38 have locking arrangements including plungers which may protrude downwardly and fit into the locking holes.

The front and rear locks 21, 22 may be placed in an unlocked mode, in which the plungers are raised above the level of the locking holes. In this mode, the front and rear locks 21, 22 may be slid freely along the tracks 8, 9, 10 to a new position.

The front and rear locks 21, 22 may also be placed in a locking mode, in which the plungers are biased downwardly towards the ambulance floor, for instance by one or more suitable springs. When the front and rear locks 21, 22 are placed in the locking mode, if the plungers are not immediately aligned with any locking holes, the front and rear locks 21, 22 may still be slid along the tracks 8, 9, 10, with the plungers sliding along the bottom surfaces of the tracks 8, 9, 10. However, as soon as the plungers become aligned with any locking holes, the plungers will be driven into the locking holes by the biasing force, and the front and rear locks 21, 22 will therefore be locked in place with respect to the ambulance floor.

In preferred embodiments, suitable locking holes and plungers are provided so that, when the plungers of the front lock 21 are aligned with locking holes, the plungers of the rear lock 22 are also simultaneously aligned with locking holes. This will ensure that, as the stretcher reaches one of the positions, the plungers of both the front and rear locks 21, 22 will engage with locking holes at the same moment.

This may be achieved by providing, for instance, a Bowden cable which is connected to a locking pedal 33, which is provided on the support frame 36 of the rear lock 22. The Bowden cable is attached to the plungers of the rear lock 22, and passes through the spacing arrangement 23, for instance passing between the bar and the cover 39. The Bowden cable extends to the front lock 22, where it is again attached to the plungers thereof. An operative may press his/her foot on the locking pedal 33, and place both the front and rear locks 21, 22 in the locking mode simultaneously. Similarly, the operative may press a release pedal 34 with his/her foot, which will simultaneously place both the front and rear locks 21, 22 in the unlocked mode.

The skilled reader will understand how this arrangement will make it very straightforward for an operative to move the stretcher 24 between the various desired positions, locking the stretcher in place with respect to the ambulance floor where needed, and easily unlocking the stretcher to be moved to a different position, or removed from the ambulance entirely.

In the example discussed above, the three tracks slant towards the front right corner of the interior space of the ambulance. However, in other embodiments the direction of slant may be reversed, i.e. so that the tracks slant towards the front left-hand corner of the ambulance floor. The direction of slant may be selected as a matter of preference, to fit with other equipment and/or fittings within the ambulance, and the direction of slant may also be influenced by whether the ambulance is a left-hand or right-hand drive vehicle.

It will be understood that embodiments of the invention provide a method for attaching an object such as the frame of a stretcher to the floor of a vehicle, such as an ambulance, in a manner which is straightforward and easy to operate. Moreover, this will allow a stretcher to be placed in positions on an ambulance floor which are useful for the ambulance crew, and allow efficient and effective use of the space within an ambulance to move and treat a patient.

When used in this specification and claims, the terms "comprises" and "comprising" and variations thereof mean that the specified features, steps or integers are included. The terms are not to be interpreted to exclude the presence of other features, steps or components.

## Claims

1. A vehicle comprising an arrangement for selectively attaching an object (24) to the floor (5) of the vehicle, the arrangement comprising:
first, second and third elongate tracks (8, 9, 10) provided on, or formed as part of, the vehicle floor (5), wherein the vehicle has a normal forward direction of travel, and the tracks (8, 9, 10) are inclined at an angle with respect to this normal forward direction of travel; and
a first locking arrangement (22), which has an engagement arrangement adapted to be received in, and travel along, the first and second tracks (8, 9), and a second locking arrangement (21), which has an engagement arrangement adapted to be received in, and travel along, the second and third tracks (9, 10), each of the locking arrangements (22, 21) being able to receive and removably retain a part of the object (24).

2. A vehicle according to claim 1, wherein a spacing arrangement (23) is provided between the first and second locking arrangements (22, 21), to maintain a fixed distance between the first and second locking arrangements (22, 21) as the first and second locking arrangements (22, 21) travel along the tracks (8, 9, 10).

3. A vehicle according to claim 2, wherein the spacing arrangement (23) is received in the second track (9), in which the first and second locking arrangements (22, 21) are both received.

4. A vehicle according to claim 3, wherein the engagement arrangements of the first and second locking arrangements (22, 21) are each received in at least one track (8, 10) in which the other the engagement arrangement of the first and second locking arrangements (22, 21) is not also received.

5. A vehicle according to claim 3 or 4, wherein, when the engagement arrangements of the first and second locking arrangements (22, 21) are received in the tracks (8, 9, 10), the first and second locking arrangements (22, 21) are substantially aligned with one another in a direction parallel with the normal forward direction of travel.

6. A vehicle according to any preceding claim, wherein each of the locking arrangements (22, 21) may be placed in a locked position, in which the locking arrangement is fixed in position with respect to at least one of the tracks (8, 9, 10), and an unlocked configuration, in which the locking arrangement (22, 21) may slide along the length of at least one of the tracks (8, 9, 10).

7. A vehicle according to claim 6, wherein each of the locking arrangements (22, 21) may be fixed in position with respect to at least one of the tracks (8, 9, 10) at a plurality of positions along the length of the track (8, 9, 10).

8. A vehicle according to claim 6 or 7 further comprising a locking control (33) which is operable to place both the first and second locking arrangements (22, 21) in the locked position.

9. A vehicle according to claim 8, in which a locking transmission arrangement extends between the first and second locking arrangements (22, 21), and preferably, when dependent upon claim 2, wherein the locking transmission arrangement extends along, or adjacent to, the spacing arrangement (23).

10. A vehicle according to any one of claims 6 to 9, further comprising an unlocking control (34), which may be operated to place both the first and second locking arrangements (22, 21) in the unlocked position.

11. A vehicle according to any preceding claim, positioned within an internal space of a vehicle, and preferably wherein the vehicle has a rear entryway (3), and one or more of the elongate tracks (8, 9, 10) terminate at one of its ends near the entryway (3).

12. A vehicle according to claim 11, wherein the front end of at least one of the tracks (8, 9, 10) terminates near a side wall (14) of the vehicle.

13. A vehicle according to claims 11 to 12, wherein the vehicle is an ambulance, and the object (24) is a frame of a stretcher.

14. A vehicle according to any one of claims 11 to 13, further comprising a seat (29) which is slidably mounted within the internal space of the vehicle, and wherein the seat (29) may slide from a first position, which is relatively close to a position of one of the locking arrangements (21), to a second position, which is further from the position of the one of the locking arrangements (21).

15. A vehicle according to claim 14, when dependent upon claim 13, wherein when a stretcher is attached to the first and second locking arrangements (22, 21), and the first and second locking arrangements (22, 21) are moved to a position with respect to the tracks (8, 9, 10), the seat (29) would obstruct the movement of the stretcher in the first position, but would not obstruct the movement of the stretcher in the second position.

## Patentansprüche

1. Fahrzeug, umfassend eine Anordnung zum wahlweisen Befestigen eines Objekts (24) auf dem Boden (5) des Fahrzeugs, die Anordnung umfassend:
eine erste, eine zweite und eine dritte längliche Schiene (8, 9, 10), die auf dem Fahrzeugboden (5) bereitgestellt oder als Teil davon ausgebildet sind, wobei das Fahrzeug eine normale Vorwärtsfahrtrichtung aufweist und die Schienen (8, 9, 10) in einem Winkel hinsichtlich dieser normalen Vorwärtsfahrtrichtung geneigt sind; und
eine erste Verriegelungsanordnung (22), die eine Eingriffsanordnung aufweist, die angepasst ist, um in die erste und die zweite Schiene (8, 9) aufgenommen zu werden und diese entlangzufahren, und eine zweite Verriegelungsanordnung (21), die eine Eingriffsanordnung aufweist, die angepasst ist, um in die zweite und die dritte Schiene (9, 10) aufgenommen zu werden und diese entlangzufahren, wobei jede der Verriegelungsanordnungen (22, 21) in der Lage ist, einen Teil des Objekts (24) aufzunehmen und entfernbar festzuhalten.

2. Fahrzeug nach Anspruch 1, wobei zwischen der ersten und der zweiten Verriegelungsanordnung (22, 21) eine Beabstandungsanordnung (23) bereitgestellt ist, um einen fixierten Abstand zwischen der ersten und der zweiten Verriegelungsanordnung (22, 21) aufrechtzuerhalten, während die erste und die zweite Verriegelungsanordnung (22, 21) die Schienen (8, 9, 10) entlangfahren.

3. Fahrzeug nach Anspruch 2, wobei die Beabstandungsanordnung (23) in die zweite Schiene (9) aufgenommen ist, in die sowohl die erste als auch die zweite Verriegelungsanordnung (22, 21) aufgenommen sind.

4. Fahrzeug nach Anspruch 3, wobei die Eingriffsanordnungen der ersten und der zweiten Verriegelungsanordnung (22, 21) jede in mindestens eine Schiene (8, 10) aufgenommen sind, in die die andere Eingriffsanordnung der ersten und der zweiten Verriegelungsanordnung (22, 21) nicht ebenso aufgenommen ist.

5. Fahrzeug nach Anspruch 3 oder 4, wobei, wenn die Eingriffsanordnungen der ersten und der zweiten Verriegelungsanordnung (22, 21) in den Schienen (8, 9, 10) aufgenommen sind, die erste und die zweite Verriegelungsanordnung (22, 21) im Wesentlichen in eine Richtung parallel zu der normalen Vorwärtsfahrtrichtung aneinander ausgerichtet sind.

6. Fahrzeug nach einem der vorstehenden Ansprüche, wobei jede der Verriegelungsanordnungen (22, 21) in eine verriegelte Position, in der die Verriegelungsanordnung hinsichtlich mindestens einer von den Schienen (8, 9, 10) in Position fixiert ist, und in eine entriegelte Konfiguration gebracht werden kann, in der die Verriegelungsanordnung (22, 21) die Länge mindestens einer von den Schienen (8, 9, 10) entlanggleiten kann.

7. Fahrzeug nach Anspruch 6, wobei jede der Verriegelungsanordnungen (22, 21) hinsichtlich mindestens einer von den Schienen (8, 9, 10) an einer Vielzahl von Positionen entlang der Länge der Schiene (8, 9, 10) in Position fixiert werden kann.

8. Fahrzeug nach Anspruch 6 oder 7, ferner umfassend eine Verriegelungssteuerung (33), die betriebsfähig ist, um sowohl die erste als auch die zweite Verriegelungsanordnung (22, 21) in die verriegelte Position zu bringen.

9. Fahrzeug nach Anspruch 8, bei dem sich zwischen der ersten und der zweiten Verriegelungsanordnung (22, 21) eine Verriegelungsübertragungsanordnung erstreckt, und vorzugsweise, wenn abhängig von Anspruch 2, wobei sich die Verriegelungsübertragungsanordnung entlang der Beabstandungsanordnung (23) oder angrenzend an diese erstreckt.

10. Fahrzeug nach einem der Ansprüche 6 bis 9, ferner umfassend eine Entriegelungssteuerung (34), die betrieben werden kann, um sowohl die erste als auch die zweite Verriegelungsanordnung (22, 21) in die entriegelte Position zu bringen.

11. Fahrzeug nach einem der vorstehenden Ansprüche, positioniert innerhalb eines Innenraums eines Fahrzeugs, und vorzugsweise wobei das Fahrzeug einen hinteren Eingang (3) aufweist und eine oder mehrere der länglichen Schienen (8, 9, 10) an einem seiner Enden in der Nähe des Eingangs (3) aufhören.

12. Fahrzeug nach Anspruch 11, wobei das vordere Ende mindestens einer von den Schienen (8, 9, 10) in der Nähe einer Seitenwand (14) des Fahrzeugs aufhört.

13. Fahrzeug nach den Ansprüchen 11 bis 12, wobei das Fahrzeug ein Krankenwagen ist und das Objekt (24) ein Rahmen einer Krankentrage ist.

14. Fahrzeug nach einem der Ansprüche 11 bis 13, ferner umfassend einen Sitz (29), der innerhalb des Innenraums des Fahrzeugs gleitbar montiert ist, und wobei der Sitz (29) von einer ersten Position, die relativ nahe an einer Position einer der Verriegelungsanordnungen (21) ist, in eine zweite Position gleiten kann, die weiter von der Position der einen der Verriegelungsanordnungen (21) entfernt ist.

15. Fahrzeug nach Anspruch 14, wenn abhängig von Anspruch 13, wobei, wenn eine Krankentrage an der ersten und der zweiten Verriegelungsanordnung (22, 21) befestigt ist und die erste und die zweite Verriegelungsanordnung (22, 21) in eine Position hinsichtlich der Schienen (8, 9, 10) bewegt werden, der Sitz (29) die Bewegung der Krankentrage in der ersten Position behindern würde, die Bewegung der Krankentrage in der zweiten Position jedoch nicht behindern würde.

## Revendications

1. Véhicule comprenant un ensemble permettant d'attacher de manière sélective un objet (24) au plancher (5) du véhicule, l'ensemble comprenant :
des premier, deuxième et troisième rails allongés (8, 9, 10) placés sur le plancher du véhicule (5) ou faisant partie de celui-ci, dans lequel le véhicule a une direction normale de déplacement vers l'avant et les rails (8, 9, 10) sont inclinés selon un angle par rapport à cette direction normale de déplacement vers l'avant ; et
un premier ensemble de verrouillage (22), qui a un ensemble de mise en prise est adapté pour être reçu dans les premier et deuxième rails (8, 9) et se déplacer le long de ceux-ci, et un second ensemble de verrouillage (21), qui a un ensemble de mise en prise adapté pour être reçu dans les deuxième et troisième rails (9, 10) et se déplacer le long de deux-ci, chacun des ensembles de verrouillage (22, 21) pouvant recevoir et retenir de manière amovible une partie de l'objet (24).

2. Véhicule selon la revendication 1, dans lequel un ensemble d'espacement (23) est prévu entre le premier et le second ensemble de verrouillage (22, 21), pour maintenir une distance fixe entre le premier et le second ensemble de verrouillage (22, 21) lorsque le premier et le second ensemble de verrouillage (22, 21) se déplacent le long des rails (8, 9, 10).

3. Véhicule selon la revendication 2, dans lequel l'ensemble d'espacement (23) est reçu dans le deuxième rail (9), dans lequel les premier et second ensembles de verrouillage (22, 21) sont tous deux reçus.

4. Véhicule selon la revendication 3, dans lequel les ensembles de mise en prise du premier et du second ensemble de verrouillage (22, 21) sont chacun reçus dans au moins un rail (8, 10) dans lequel l'autre ensemble de mise en prise du premier et du second ensemble de verrouillage (22, 21) n'est pas également reçu.

5. Véhicule selon la revendication 3 ou 4, dans lequel, lorsque les ensembles de mise en prise des premier et second ensembles de verrouillage (22, 21) sont reçus dans les rails (8, 9, 10), les premier et second ensembles de verrouillage (22, 21) sont sensiblement alignés l'un sur l'autre dans une direction parallèle à la direction normale de déplacement vers l'avant.

6. Véhicule selon l'une quelconque revendication précédente, dans lequel chacun des ensembles de verrouillage (22, 21) peut être placé dans une position verrouillée, dans laquelle l'ensemble de verrouillage est fixé en position par rapport à au moins l'un parmi les rails (8, 9, 10), et dans une configuration déverrouillée, dans laquelle l'ensemble de verrouillage (22, 21) peut coulisser sur la longueur d'au moins l'un parmi les rails (8, 9, 10).

7. Véhicule selon la revendication 6, dans lequel chacun des ensembles de verrouillage (22, 21) peut être fixé en position par rapport à au moins l'un parmi les rails (8, 9, 10) à une pluralité de positions sur la longueur du rail (8, 9, 10).

8. Véhicule selon la revendication 6 ou 7, comprenant en outre une commande de verrouillage (33) qui est actionnée pour placer le premier et le second ensemble de verrouillage (22, 21) en position verrouillée.

9. Véhicule selon la revendication 8, dans lequel un ensemble de transmission de verrouillage s'étend entre le premier et le second ensemble de verrouillage (22, 21), et de préférence, lorsqu'elle dépend de la revendication 2, dans lequel l'ensemble de transmission de verrouillage s'étend le long de l'ensemble d'espacement (23) ou à côté de celui-ci.

10. Véhicule selon l'une quelconque des revendications 6 à 9, comprenant en outre une commande de déverrouillage (34), qui peut être actionnée pour placer le premier et le second ensemble de verrouillage (22, 21) en position déverrouillée.

11. Véhicule selon l'une quelconque revendication précédente, positionné dans un espace interne d'un véhicule, et de préférence, dans lequel le véhicule a une entrée arrière (3), et un ou plusieurs des rails allongés (8, 9, 10) se terminent au niveau de l'une de ses extrémités près de l'entrée (3).

12. Véhicule selon la revendication 11, dans lequel l'extrémité avant d'au moins l'un parmi les rails (8, 9, 10) se termine près d'une paroi latérale (14) du véhicule.

13. Véhicule selon les revendications 11 à 12, dans lequel le véhicule est une ambulance et l'objet (24) est un cadre de civière.

14. Véhicule selon l'une quelconque des revendications 11 à 13, comprenant en outre un siège (29) monté de manière coulissante dans l'espace interne du véhicule, et dans lequel le siège (29) peut coulisser d'une première position, relativement proche d'une position de l'un des ensembles de verrouillage (21), vers une seconde position, plus éloignée de la position de l'un des ensembles de verrouillage (21).

15. Véhicule selon la revendication 14, lorsqu'elle dépend de la revendication 13, dans lequel lorsqu'une civière est attachée aux premier et second ensembles de verrouillage (22, 21), et que les premier et second ensembles de verrouillage (22, 21) sont déplacés vers une position par rapport aux rails (8, 9, 10), le siège (29) entraverait le mouvement de la civière dans la première position, mais n'entraverait pas le mouvement de la civière dans la seconde position.
